# EUROPEAN PATENT SPECIFICATION

(11) **EP 2 959 149 B1**
(45) Date of publication and mention of the grant of the patent: **04.05.2022**
(21) Application number: 14754278.1
(22) Date of filing: 19.02.2014
(51) Int. Cl.: F02K 3/06, F02C 7/24, F02C 3/107

(54) **GAS TURBINE ENGINE CORE UTILIZED IN BOTH COMMERCIAL AND MILITARY ENGINES**
GASTURBINENMOTORKERN FÜR INDUSTRIELLE UND MILITÄRISCHE MOTOREN
PARTIE CENTRALE DE MOTEUR À TURBINE À GAZ UTILISÉE À LA FOIS DANS DES MOTEURS MILITAIRES OU COMMERCIAUX

(30) Priority: 25.02.2013 US 201361768686 P
(43) Date of publication of application: 30.12.2015
(73) Proprietor: Raytheon Technologies Corporation, Farmington, CT 06032 (US)
(72) Inventor: ROBERGE, Gary D., Tolland, Connecticut 06084 (US); CARLTON, Richard A., Glastonbury, Connecticut 06033 (US); HUDSON, Eric A., Harwinton, Connecticut 06791 (US)
(74) Representative: Dehns
(86) International application number: PCT/US2014/017015
(87) International publication number: WO 2014/130494

(56) References cited:
- US-A1- 2008 098 714
- US-A1- 2008 141 650
- US-A1- 2009 107 109
- US-A1- 2012 233 981
- US-B2- 7 353 647
- Jayant Sabnis ET AL: "THE PW1000G PURE POWER NEW ENGINE THE PW1000G PURE POWER NEW ENGINE CONCEPT AND ITS IMPACT ON MRO Jayant Sabnis Vice President, System Functional Design Av Week Engine MRO Forum", , 1 December 2010 (2010-12-01), pages 1-45, XP055155486, Av Week engine MRO Forum, Munich, Germany Retrieved from the Internet: URL:http://events.aviationweek.com/html/mr oeng10/Day2 - The PW1000G Pure Power New Engine Concept.SABNIS (P&W).pdf [retrieved on 2014-11-27]
- Pratt ET AL: , 1 December 2010 (2010-12-01), XP055248487, Retrieved from the Internet: URL:http://www.purepowerengine.com/pdf/new sletters/PurePower_PW1000G_newsletter_Dec_ 2010.pdf [retrieved on 2016-02-08]
- Rolls Royce: "The Jet Engine" In: "The Jet Engine", 20 July 2015 (2015-07-20), John Wiley & Sons, XP055461175, ISBN: 978-1-119-06599-9 pages 28-28,
- Wittenberg H: "Aircraft Propulsion Leading the way in Aviation" In: "Aircraft Propulsion Leading the way in Aviation", 1 September 1987 (1987-09-01), XP055796527, pages 1-38,

## Description

### BACKGROUND OF THE INVENTION

This application relates to the use of a core engine designed for commercial purposes, but which is utilized in military applications.

Gas turbine engines are known and, typically, include a fan delivering air into a compressor. From the compressor the air passes into a combustor where it is mixed with fuel and ignited. Products of this combustion pass downstream over turbine rotors driving them to rotate. The turbine rotors, in turn, drive the compressor and fan rotors.

Historically, commercial engines have had a turbine rotor which directly drives the fan. For any number of reasons it may be desirable for the fan to rotate at slower speeds in commercial engines.

Thus, it has recently been proposed to incorporate a gear between a fan drive turbine and the fan, such that the fan can rotate at a reduced rate. This has allowed the diameter of the fan to increase dramatically. The fan also delivers air as bypass flow, which becomes propulsion for an associated aircraft. As the fan diameter increases, a bypass ratio or the volume of air passing as bypass flow as compared to the volume of air passing into a core engine into the compressor, has become greater. The use of a gear effectively disconnects the connection in traditional direct-drive engines between desired fan speed and the remaining compression and turbine components on a common shaft. A different fan speed, typically slower, can be provided without penalizing other compression and turbine components allowing them to operate at higher speeds resulting in reduced part count and increased efficiency.

The applicant of this application has done a great deal of development work to develop very efficient gas turbine engines incorporating such a gear reduction.

Military engines typically do not need to include a slow rotating fan. Rather, a higher speed fan is typically utilized with lower bypass ratios. A military engine must be able to develop very high levels of power for high speed maneuvering. Military installations are often buried within the aircraft structure and place a value on reduced diameter that may result from increased component rotational speed. Military engines are also typically developed in volumes that are much smaller than those for commercial engines. "THE PW1000G PURE POWER NEW ENGINE CONCEPT AND ITS IMPACT ON MRO Aviation Week Engine MRO Forum", (1 December 2010) by Jayant Sabnis et al. discloses a geared turbofan engine according to the prior art.

### SUMMARY OF THE INVENTION

In accordance with the invention, there is provided a method of manufacturing a military engine as set forth in claim 1.

In another embodiment according to any of the previous embodiments, the fan designed with the complete commercial engine delivers air into a bypass duct, and into a compressor. A bypass ratio is defined as a ratio of the volume of air delivered into the bypass duct compared to the volume of air delivered into the compressor. The bypass ratio for the complete commercial engine is greater than about 10, and a bypass ratio for the engine utilized for military purposes is in a range of between about .5 and 8.

Also in accordance with the invention, there is provided a method of manufacturing a military engine as set forth in claim 4.

These and other features may be best understood from the following drawings and specification.

### BRIEF DESCRIPTION OF THE DRAWINGS

Figure 1 shows a schematic of a commercial engine.
Figure 2 shows a schematic of a military engine.
Figure 3A shows details of a commercial engine.
Figure 3B shows a core of that commercial engine incorporated into a military application.
Figure 4A shows details of the commercial engine along the circle 4A of Figure 3A.
Figure 4B shows the same area in a military application.
Figure 5 shows an alternative embodiment.

### DETAILED DESCRIPTION

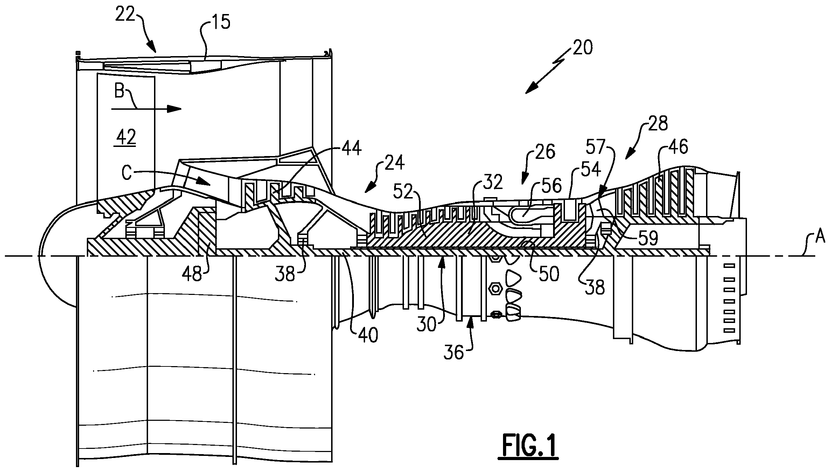

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a fan case 15, while the compressor section 24 drives air along a core flow path C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path allowing fluid communication between turbines 56 and 46 while supporting bearing 38. The turbines 46, 54 rotationally drive the respective low speed spool 30 and high speed spool 32 in response to the expansion.

The engine 20 in one example is a high-bypass geared aircraft engine. In a further example, the engine 20 bypass ratio is greater than about six (6), with an example embodiment being greater than ten (10), the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans, and turbofans with different bearing support systems not using a mid-turbine frame.

A significant amount of thrust is provided by the bypass flow B due to the high bypass ratio and corresponding proportion of overall engine fan flow. The fan section 22 of the engine 20 is designed for a particular flight condition -- typically cruise at about 0.8 Mach and about 35,000 feet (10,668 m). The flight condition of 0.8 Mach and 35,000 feet (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.5. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft/second (351 m/s).

The above description is of a commercial engine. Military engines are structured differently as mentioned below.

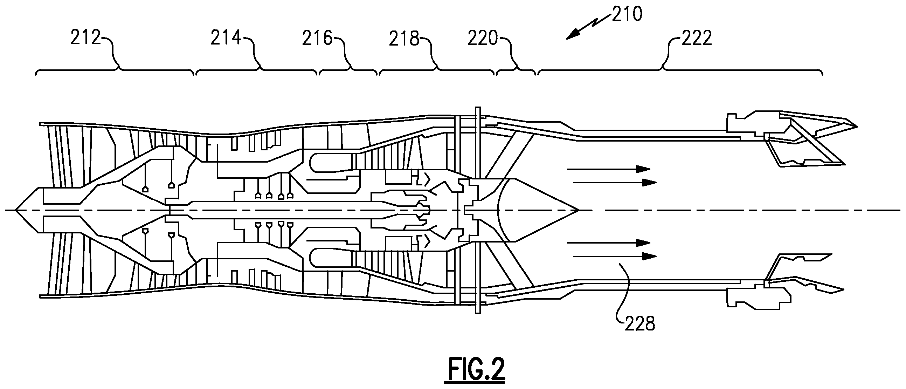

Figure 2 shows a military gas turbine engine 210.

Referring to Figure 2, a gas turbine engine 210 includes a fan or low pressure compression section 212, a higher pressure compressor section 214, a combustor section 216, and a turbine section 218. Air entering into the fan section 212 is initially compressed and fed to the compressor section 214. In the compressor section 214, the incoming air from the fan section 212 is further compressed and communicated to the combustor section 216. In the combustor section 216, the compressed air is mixed with gas and ignited to generate a hot exhaust stream 228. The hot exhaust stream 228 is expanded through the turbine section 218 to drive the fan section 212 and the compressor section 214. In this example, the gas turbine engine 210 includes an augmenter section 220 where additional fuel can be mixed with the exhaust gasses 228 and ignited to generate additional thrust. The exhaust gasses 228 flow from the turbine section 218 and the augmenter section 220 through an exhaust liner assembly 222.

The applicant of this application manufactures both commercial and military engines. In general, a commercial engine, as described in this application, will have low corrected fan tip speeds less than about 1150 ft/second (351 m/s). Conversely, a military engine will have low corrected fan tip speeds in a range of 1300 - 1550 ft/second (396 - 472 m/s). While the commercial engines described above have bypass ratios greater than about 6, and in embodiments greater than about 10, the bypass ratio for military engines will be in a range of .5 - 8.

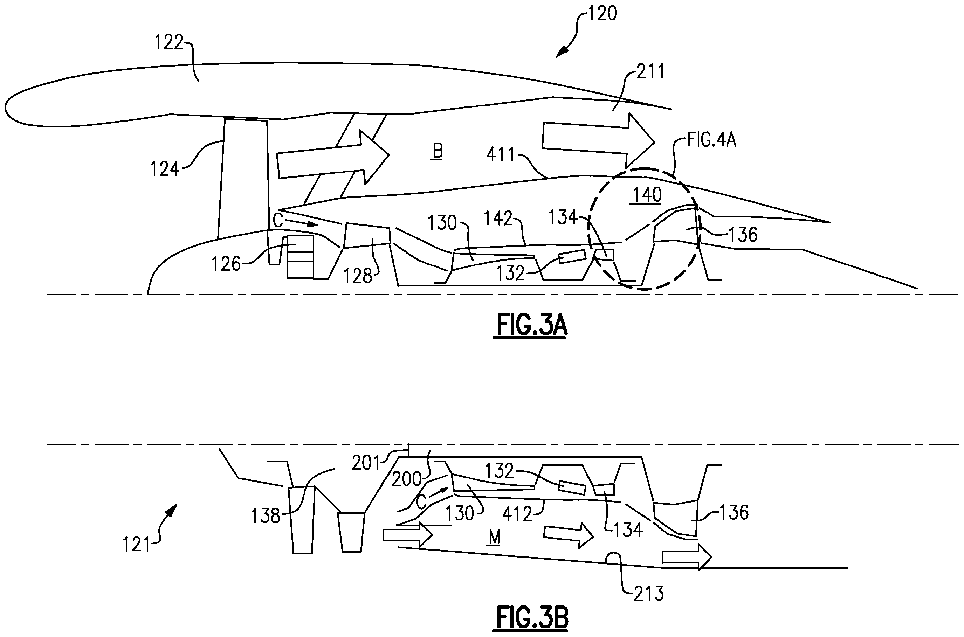

Figure 3A shows details of a commercial engine 120. The nacelle 122 surrounds the fan 124, which typically has a very large diameter. A gear reduction 126 connects the fan 124 to a low pressure compressor 128. The low pressure compressor 128 is driven by a low pressure turbine 136, allowing the fan to operate at a lower speed due to the gear ratio provided speed reduction.

The low pressure turbine 136, since it is not directly driving the fan 124, can rotate at speeds that are much faster than in direct drive engines.

A high pressure turbine 134 is positioned upstream of low pressure turbine 136 and drives a high pressure compressor 130. A combustor 132 receives compressed air from the high pressure compressor 130, mixes it with fuel and ignites the air. Products of that combustion pass downstream through the high pressure turbine 134 and then the low pressure turbine 136.

The assignee of this application has invested a great deal of design work in designing gas turbine engines, such as gas turbine engine 120 for commercial applications.

Figure 3B shows a military engine 121 wherein significant, high value core portions of the engine 120 are utilized. A shaft 200 is separated at a point 201 from the engine 120, such that the low pressure compressor 128, the gear reduction 126 and the fan 124 are removed. Instead, a high speed fan 138, such as is well known for military applications, is replaced and driven by the existing low pressure turbine 136.

The high pressure compressor 130, combustor 132, the high pressure turbine 134, and the low pressure turbine 136 are all utilized. In the past, the low pressure turbines of direct drive engines were designed to rotate too slow to drive a military fan. The inventors of this application have recognized the faster rotating low pressure turbine 136 does not have this limitation.

In practice, some airfoils may be modified to optimize component efficiency for military applications. In particular, the low pressure turbine 136, and perhaps airfoils in the mid-turbine frame 57, may be modified

As shown in Figure 3A, the bypass flow B is in a bypass duct 211, which is spaced by the extension of the fan case 15 and core cowl 411. The core cowl 411 prevents the bypass flow B from directly contacting the engine outer case (or housing) 142 as the air in cavity 140 is isolated from high velocity flow.

As shown in Figure 3B, in the military engine 121, the bypass duct 213 is not spaced from the outer housing 412 and the bypass air M can cool the housing 412.

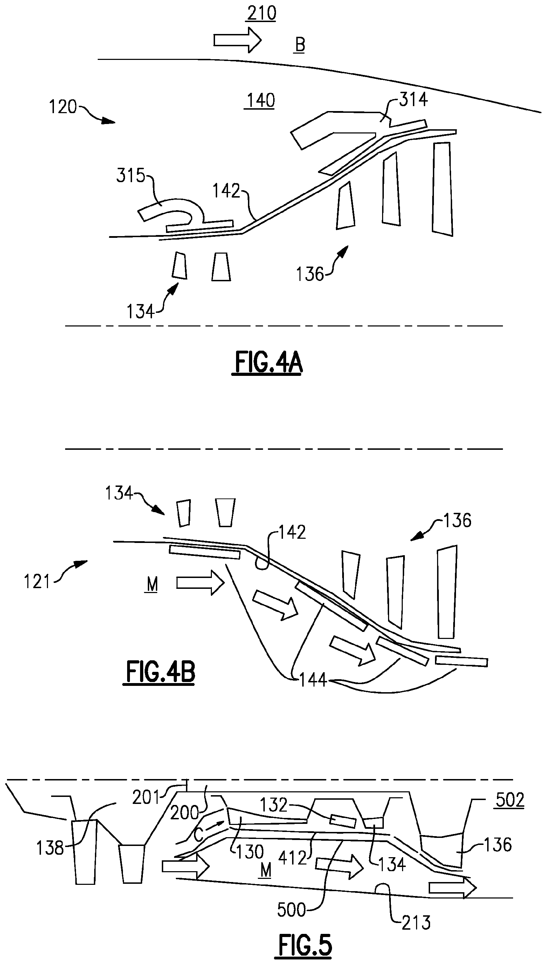

As shown in Figure 4A, the commercial engine 120 has the chamber 140 between the housing 142 and the bypass duct 211. The high pressure turbine 134 is positioned upstream of the low pressure turbine 136. Active clearance control case cooling manifolds 314 and 315 and associated features to influence the operating clearance of the high pressure turbine 134 and/or the low pressure turbine 136 may be included.

When utilized in a military application, the housing 142 is insulated to prevent excessive cooling of the core engine, the Mid-Turbine Frame and the Low Pressure Turbine. Thus, one or more thermal insulation or heat shields 144 may be utilized on the outer case 142.

Alternatively, as shown in Figure 5, a military application specific core cowl 500 shrouding the entire core engine from the compressor 130 through the turbine exhaust case 502 can be used to control the thermal environment of those components to an optimum level. The heat shields or military-specific core cowl 500 may be designed to permit a limited amount of fan air to flow between the heat shields or core cowl and the core engine cases.

The disclosed method and engine allow a very well designed core engine to be utilized in a military application, without the need to design a new core engine. Thus, the expense and time for developing military engines will be greatly reduced. In addition, the structural lifing requirements used to design the parent engine may result in significant sustainment cost savings in the military application.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A method of manufacturing a military engine comprising the steps of:
designing a commercial engine core (120), including a combustor, a high pressure compressor driven by a high pressure turbine, and a low pressure turbine designed to drive a low pressure compressor, and a fan through a gear reduction (126);
attaching a high speed fan (138) to said commercial engine core to form an engine designed for military purposes; and
said commercial engine core being designed as a complete commercial engine, with the complete commercial engine having a low corrected fan tip speed of less than 1150 ft / second (351 m/s), and the engine designed for military purposes having a low corrected fan tip speed of between about 1300 - 1550 ft / second (396 - 472 m/s), wherein a core engine housing (142) is provided with insulation on an outer surface.

2. The method as set forth in claim 1, wherein the fan designed with the complete commercial engine delivers air into a bypass duct, and into a compressor, and a bypass ratio is defined as a ratio of the volume of air delivered into the bypass duct compared to the volume of air delivered into the compressor, with the bypass ratio for the complete commercial engine being greater than about 10, and a bypass ratio for the engine utilized for military purposes being in a range of between about .5 and 8.

3. The method as set forth in any preceding claim, wherein at least some airfoils are modified from the commercial engine core design for the engine for military purposes.

4. A method of manufacturing a military engine comprising the steps of:
designing a commercial engine core (120), including a combustor, a high pressure compressor driven by a high pressure turbine, and a low pressure turbine designed to drive a low pressure compressor, and a fan through a gear reduction (126);
attaching a high speed fan (138), to said low pressure turbine, such that the combustor, high pressure compressor, low and high pressure turbines from an engine designed for commercial purposes is utilized for military purposes; said commercial engine core being designed as a complete commercial engine and being designed for a low corrected fan tip speed of less than 1150 ft / second (351 m/s), and the engine to be utilized for military purposes having a low corrected fan tip speed of between about 1300 - 1550 ft / second (396-472 m/s); and
the fan designed with the complete commercial engine delivers air into a bypass duct, and into a compressor, and a bypass ratio is defined as a ratio of the volume of air delivered into the bypass duct compared to the volume of air delivered into a compressor, with the bypass ratio for the complete commercial engine being greater than about 10, and a bypass ratio for the engine utilized for military purposes being in a range of between about .5 and 8, wherein a core engine housing (142) is provided with insulation on an outer surface.

5. The method as set forth in claim 4, wherein at least some airfoils are modified from the commercial engine core design for the engine for military purposes.

## Patentansprüche

1. Verfahren zum Herstellen eines militärischen Motors, umfassend die folgenden Schritte:
Konstruieren eines Kerns (120) eines industriellen Motors,
der eine Brennkammer, einen Hochdruckverdichter, der von einer Hochdruckturbine angetrieben wird, und eine Niederdruckturbine beinhaltet, die dazu konstruiert ist, einen Niederdruckverdichter und einen Lüfter durch eine Getriebeuntersetzung (126) anzutreiben;
Anbringen eines Hochgeschwindigkeitslüfters (138) an dem Kern des industriellen Motors, um einen Motor zu bilden, der für militärische Zwecke konstruiert ist; und
wobei der Kern des industriellen Motors als vollständiger industrieller Motor konstruiert ist, wobei dar vollständige industrielle Motor eine niedrige korrigierte Lüfterspitzendrehzahl von weniger als 1150 Fuß/Sekunde (351 m/s) aufweist und der für militärische Zwecke konstruierte Motor eine niedrige korrigierte Lüfterspitzendrehzahl zwischen etwa 1300-1550 Fuß/Sekunde (396-472 m/s) aufweist, wobei ein Motorkerngehäuse (142) mit einer Isolierung an einer Außenfläche bereitgestellt ist.

2. Verfahren nach Anspruch 1, wobei der mit dem vollständigen industriellen Motor konstruierte Lüfter einer Umgehungsleitung und einem Verdichter Luft zuführt und ein Umgehungsverhältnis als Verhältnis des der Umgehungsleitung zugeführten Luftvolumens im Vergleich zu dem dem Verdichter zugeführten Luftvolumen definiert ist, wobei das Umgehungsverhältnis für den vollständigen industriellen Motor größer als etwa 10 ist und ein Umgehungsverhältnis für den für militärische Zwecke genutzten Motor in einem Bereich zwischen etwa 0,5 und 8 liegt.

3. Verfahren nach einem der vorangehenden Ansprüche, wobei mindestens einige Strömungsprofile von der Konstruktion des Kerns des industriellen Motors für den Motor zu militärischen Zwecken modifiziert werden.

4. Verfahren zum Herstellen eines militärischen Motors, umfassend die folgenden Schritte:
Konstruieren eines Kerns (120) eines industriellen Motors,
der eine Brennkammer, einen Hochdruckverdichter, der von einer Hochdruckturbine angetrieben wird, und eine Niederdruckturbine beinhaltet, die dazu konstruiert ist, einen Niederdruckverdichter und einen Lüfter durch eine Getriebeuntersetzung (126) anzutreiben;
Anbringen eines Hochgeschwindigkeitslüfters (138),
an die Niederdruckturbine, sodass die Brennkammer, der Hochdruckverdichter sowie die Nieder- und Hochdruckturbine von einem für industrielle Zwecke konstruierten Motor für militärische Zwecke genutzt werden; wobei der Kern des industriellen Motors als vollständiger industrieller Motor konstruiert ist und für eine niedrige korrigierte Gebläsespitzendrehzahl von weniger als 1150 Fuß/Sekunde (351 m/s) konstruiert ist und der für militärische Zwecke zu nutzende Motor eine niedrige korrigierte Gebläsespitzendrehzahl zwischen etwa 1300-1550 Fuß/Sekunde (396-472 m/s) aufweist; und
der mit dem vollständigen industriellen Motor konstruierte Lüfter einer Umgehungsleitung und einem Verdichter Luft zuführt und ein Umgehungsverhältnis als Verhältnis des der Umgehungsleitung zugeführten Luftvolumens im Vergleich zu dem einem Verdichter zugeführten Luftvolumen definiert ist, wobei das Umgehungsverhältnis für den vollständigen industriellen Motor größer als etwa 10 ist und ein Umgehungsverhältnis für den für militärische Zwecke genutzten Motor in einem Bereich zwischen etwa 0,5 und 8 liegt, wobei ein Motorkerngehäuse (142) mit einer Isolierung auf einer Außenfläche bereitgestellt ist.

5. Verfahren nach Anspruch 4, wobei mindestens einige Strömungsprofile von der Konstruktion des Kerns des industriellen Motors für den Motor zu militärischen Zwecken modifiziert werden.

## Revendications

1. Procédé de fabrication d'un moteur militaire comprenant les étapes :
de conception d'un noyau de moteur commercial (120), comportant une chambre de combustion, un compresseur haute pression entraîné par une turbine haute pression, et une turbine basse pression conçue pour entraîner un compresseur basse pression, et une soufflante par l'intermédiaire d'un démultiplicateur (126) ;
de fixation d'une soufflante à grande vitesse (138) audit noyau de moteur commercial pour former un moteur conçu à des fins militaires ; et
ledit noyau de moteur commercial étant conçu comme un moteur commercial complet, le moteur commercial complet ayant une faible vitesse de pointe de soufflante corrigée inférieure à 1 150 pieds/seconde (351 m/s), et le moteur conçu à des fins militaires ayant une faible vitesse de pointe de soufflante corrigée comprise entre environ 1 300 et 1 550 pieds/seconde (396 et 472 m/s), dans lequel un carter de moteur central (142) est pourvu d'une isolation sur une surface externe.

2. Procédé selon la revendication 1, dans lequel la soufflante conçue avec le moteur commercial complet délivre de l'air dans un conduit de dérivation, et dans un compresseur, et un rapport de dérivation est défini comme un rapport du volume d'air délivré dans le conduit de dérivation par rapport au volume d'air délivré dans le compresseur, le rapport de dérivation pour le moteur commercial complet étant supérieur à environ 10, et un rapport de dérivation pour le moteur utilisé à des fins militaires étant compris entre environ 0,5 et 8.

3. Procédé selon une quelconque revendication précédente, dans lequel au moins certains profils aérodynamiques sont modifiés par rapport à la conception de noyau de moteur commercial pour le moteur à des fins militaires.

4. Procédé de fabrication d'un moteur militaire comprenant les étapes :
de conception d'un noyau de moteur commercial (120),
comportant une chambre de combustion, un compresseur haute pression entraîné par une turbine haute pression, et une turbine basse pression conçue pour entraîner un compresseur basse pression, et une soufflante par l'intermédiaire d'un démultiplicateur (126) ;
de fixation d'une soufflante à grande vitesse (138), à ladite turbine basse pression, de sorte que la chambre de combustion, le compresseur haute pression, les turbines basse et haute pression d'un moteur conçu à des fins commerciales sont utilisés à des fins militaires ; ledit noyau de moteur commercial étant conçu comme un moteur commercial complet et étant conçu pour une faible vitesse de pointe de soufflante corrigée inférieure à 1 150 pieds/seconde (351 m/s), et le moteur devant être utilisé à des fins militaires ayant une faible vitesse de pointe de soufflante corrigée comprise entre environ 1 300 et 1 550 pieds/seconde (396-472 m/s) ; et
la soufflante conçue avec le moteur commercial complet délivre de l'air dans un conduit de dérivation, et dans un compresseur, et un rapport de dérivation est défini comme un rapport du volume d'air délivré dans le conduit de dérivation par rapport au volume d'air délivré dans un compresseur, le rapport de dérivation pour le moteur commercial complet étant supérieur à environ 10, et un rapport de dérivation pour le moteur utilisé à des fins militaires étant compris entre environ 0,5 et 8, dans lequel un carter de moteur central (142) est pourvu d'une isolation sur une surface externe.

5. Procédé selon la revendication 4, dans lequel au moins certains profils aérodynamiques sont modifiés par rapport à la conception de noyau de moteur commercial pour le moteur à des fins militaires.
